# EUROPEAN PATENT APPLICATION

(11) **EP 2 252 048 A1**
(43) Date of publication of application: **17.11.2010**
(21) Application number: 09006492.4
(22) Date of filing: 13.05.2009
(51) Int. Cl.: H04N 5/44, H04N 7/16

(54) **A method of providing television program information**

(71) Applicant: Sony Europe Limited, The Heights Brooklands Weybridge KT13 0XW (GB)
(72) Inventor: Rodrigues, Jose Alexandre Simoes, 84028 Landshut (DE); Raesig, Tassilo Volker, 84028 Landshut (DE)
(74) Representative: Müller - Hoffmann & Partner

(57) **Abstract**

A method for providing television program information, comprising: determining a device profile of an receiver, transmitting the device profile to a server, determining a user profile of a user of the receiver, determining, at the server, the television program information based on the user profile and on the device profile.

## Description

An embodiment of the invention relates to a method for providing television program information. Further embodiments of the invention relate to a television receiver, a server, and a system for enhancing a user's television experience.

### BACKGROUND

There exist many devices that are capable of receiving television signals. These devices usually differ in technical capabilities such as, for example in processing power, storage capacity and/or display capability.

It is an object of the invention to provide method for providing television program information which enhances a user's experience.

This object is solved by a method, a television receiver, a server, and a system according to the independent claims.

Further details of the invention will become apparent from a consideration of the drawings and the ensuing description.

### BRIEF DESCRIPTION OF SEVERAL VIEWS OF THE DRAWINGS

The accompanying drawings are included to provide a further understanding of the embodiments and are incorporated in and constitute a part of this specification. The drawings illustrate embodiments and together with the descriptions serve to explain principles of embodiments. Other embodiments and many of the intended advantages will be readily appreciated as they become better understood by reference to the following detailed description. The elements of the drawings are not necessarily to scale relative to each other. Like reference numerals designate corresponding similar parts.
- Fig. 1: illustrates an embodiment of a method for providing television program information.
- Fig. 2: illustrates a system including a television receiver and a server for providing television program information.
- Fig. 3a: illustrates a further embodiment of a television receiver.
- Fig. 3b: illustrates still a further embodiment of a television receiver.
- Fig. 4: illustrates another embodiment of a system for providing television program information.
- Fig. 5: illustrates a collection of navigation information.
- Fig. 6: illustrates an aggregation of navigation information at two different levels of granularity.
- Fig. 7: illustrates three metadata profiles.
- Fig. 8: illustrates a mapping of the metadata profiles to user profiles.
- Fig. 9: illustrates a system for providing television program information related to applications.

### DETAILED DESCRIPTION

In the following, embodiments of the invention are described. It is important to note that all described embodiments may be combined in any way, i.e. there is no limitation that certain described embodiments may not be combined with others. Further, it should be noted that same reference signs throughout the Figures denote same or similar elements.

It is further to be understood that other embodiments may be utilized and structural or logical changes may be made without departing from the scope of the invention. The following detailed description, therefore, is not to be taken in a limiting sense, and the scope of the present invention is defined by appended claims.

It is to be understood that the features of the various embodiments described herein may be combined with each other, unless specifically noted otherwise.

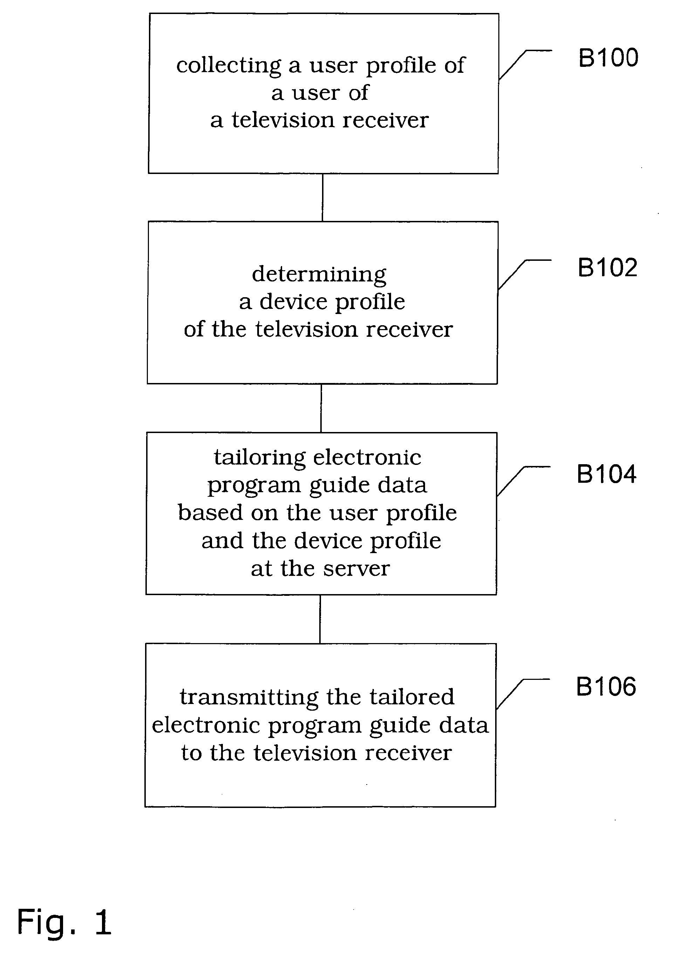

In Figure 1, an embodiment of a method of providing television program information from a server to a user of a receiver is illustrated. The receiver may be embodied, as shown, by a television receiver.

At B100, a user profile of the user of the television receiver is collected.

This may be achieved by observing a user's viewing behavior, e.g. by observing navigation commands used when selecting channels or programs, or by analyzing the user's explicit feedback to channels and/or programs of the broadcast signal, as will be described in more detail below. The user's viewing behavior may be related to or stored in a user profile of the user. The user profile may be determined at the receiver or at the server side, as will be illustrated in more detail below.

The television receiver may be any kind of device which is adapted to receive a television broadcast signal, e.g. a signal of analogue or digital video broadcasting (DVB). The signal may, for example, be transmitted via satellite (DVB-S, DVB-S2, DVB-SH, DVB-SMATV), via cable (DVB-C), as a digital terrestrial television signal (DVB-T, DVB-T2), as digital terrestrial television signal for handhelds (DVB-H, DVB-SH), or via microwave (DVB-MT, DVB-MC, DVB-MS). Various different standards for analogue or digital television are possible.

At B102, a device profile of the television receiver is determined.

The device profile may, for example, depend on a type of the television receiver.

For example, the television receiver may be a stationary device such as a television set typically used in living room environments. The type of the television receiver may accordingly be regarded as 'stationary'.

Alternatively, the television receiver may be a media center personal computer (Media Center PC) may having one of a built in DVB tuner, an Ethernet port, a multiple data processor, a large disc drive, and random access memory with high storage capacity. In this case, the type of the receiver may be set to 'media center personal computer' or the like.

As a further example, the television receiver may also be included in a set top box. In this case, the type of receiver may be set to 'set top box' or an equivalent type.

A still further example of a television receiver is a portable device like a mobile phone, personal digital assistant or a receiver such as a portable media player, a portable storage device or a portable game device such as a PlayStation^{™} portable. In this case, the type of the receiver may be set, for example, to 'portable' or 'handheld'. Such a device may be equipped with a broadcast receiver e.g. a DVB-H or 1-Seg receiver. In some embodiments it may receive video data via point to point high speed wireless data networks, such as an HSPDA network.

In an embodiment of the invention, the device profile may also be based on a hardware component (hardware profile/characteristics) of the television receiver/receiver. In this case, the device profile may be determined based on a technical parameter of the hardware component, such as a data processing rate, an access rate or a size of the hardware component, as will be explained in more detail below.

At B104, the television program information is determined or "tailored" based on the user profile and the device profile at the server side.

The television program information may include, for example, information descriptive of content to be broadcast by channels of a broadcast signal, e.g. information descriptive of channels of the broadcast signal and programs transmitted by the television channels. "Channel" should be understood as that which is conventionally understood by a user, e.g. BBC1, ZDF, TF1 or Fox News, which is termed a service in the DVB environment. Program or Event should be understood as broadcast of finite duration on a channel, such as Desperate Housewives, Tuesday 24 March, 18.45 to 19:00 and a channel name or number. The television broadcast information may for example the suited to be included in an electronic program guide (EPG).

Further, the television program information may also be descriptive of content which may be accessible over a further network, such as content provided by a video on demand server or "catch up" video content of programs that have been transmitted in the past, which may be provided by a server of e.g. a broadcaster.

Further, television program information may also be understood as any additional information to be displayed to the user in connection with the program currently viewed, such as advertisings or promotional information.

Still further, the television program information may include software, such as an application including application logic and application data, which may be executed in an application execution engine or the like provided at the receiver, establishing a runtime environment for widgets, gadgets, applets or the like.

Meta data to be included to the television program information, e.g. meta data related to video content items or meta data related to applications, may be obtained from an arbitrary data provider, such as an internal or external data base. From the available meta data, a part of the data may be selected, tailored and/or packaged according to the user profile and to the device profile. This allows providing television program information matching the interest of the user on the one hand and adapted to be adequately handled by the television receiver on the other hand. When tailoring the television program information with respect to both profiles, the user profile and the device profile, adaption to both profiles may be enhanced and/or optimized. The selection, tailoring and/or packaging of the meta data with respect to the user profile and the device profile will be explained in more detail below.

At B106, the EPG data, tailored with respect to the user's interests and with respect to the device profile, are transmitted to the television receiver as metadata for supporting the user's channel and program choice.

As mentioned above, the device profile may depend on a hardware component such as a storage for storing, inter alia, the television program information related to the television broadcast signal. In this case, the device profile may, for example, depend on a size of the storage. Further, the device profile may also depend on whether the size of the storage may be enlarged, e.g. by virtual storage components. Still further, the device profile may depend on an access rate to the storage, and therefore on whether a cache storage is available.

In this case, the size of the storage or the availability of virtual storage is used as a basis for selecting, tailoring and/or packaging the television program information. The size of the television program information may, for example, be determined such that the television receiver may handle, e.g. store, the data without any problem. Thereby, the known problem of the user encountering empty pages when scrolling through the electronic program guide or of the user having to wait while new data is downloaded may be avoided.

By taking the size of the storage into account when determining the television program information, it may further be guaranteed that for each channel and/or program, a predefined minimum amount of data is available. For example, it may be guaranteed that the title of each channel and/or program is available in the television program information.

By taking into account the total amount of storage available and by restricting the absolute amount of storage e.g. for channels or programs which are of only little interest for the user (which is determined based on the user profile), it is possible to provide more detailed information for channels or programs the user is interested in. This holds true even for devices with a limited storage capacity. Accordingly, it is possible to provide additional or rich information for channels or programs the user is interested in. Such additional information may be an additional description, the mentioning of contributing persons such as artists or actors, or a thumbnail of e.g. the currently broadcast video of the respective channel.

Still further, if the device profile indicates that a suitable storage is available, further additional information, such as advertisings, additional links, or special offers, viewers' reviews or rankings may further be included in the tailored television program information. The additional (rich) information may be selected in accordance with the user profile.

In another embodiment, the hardware component on which the device profile depends may be a buffer used for communicating e.g. with the server providing the television program information. A size or access rate of the buffer may have significant influence on a speed of the communication between server and receiver, and may therefore be used as a basis for determining the device profile.

If, in this case, the device profile is based on the size or the access rate of the buffer, and if it may be distinguished if the EPG data is loaded upfront or on demand, then the amount of EPG data to be transmitted may be accustomed to the buffer size or access rate of the buffer. Thereby, it may be prohibited that a user, when scrolling through the EPG, encounters empty pages and/or experiences long loading times.

In a further embodiment of the invention, the hardware component on which the device profile depends may also be a display for displaying the television program information to a user. The device profile, in this case, may depend on whether a large display adapted for displaying high quality pictures with a large color depth is available, or whether only a small display with a limited number of pixels and a limited color depth is used.

In this case, it may be decided based on the device profile, whether pictures, graphics or thumbnails for characterizing e.g. channels and/or programs are to be included into the EPG data, or if they should be omitted. Further, the pictures may be compressed or reduced in dimension in accordance with the display capabilities, thereby reducing the loading time and storage need. Also, the amount of textual information may be reduced in case of a small display and enlarged in case of a large display.

In a further embodiment of the invention, the device profile may depend on a data processor of the television receiver, which may be used for processing the television program information during display and navigation. In this case, the amount and complexity of the EPG data may depend on a data processing rate or a processing capability of the data processor. For example, if processing speed is low, not video data, e.g. related to preview of a television program, may be included in the EPG data, whereas if processing speed is high, such video data may be included.

In a further embodiment of the invention, the device profile may also depend on a communication connection between the receiver and the server providing the television program information. It may, for example, depend on a user's LAN speed or bandwidth or a data rate dictated by an internet service provider. These may vary with time, e.g. if traffic shaping is applied to an ADSL connection. The communication connection may follow a certain standard, such as IEEE 802.11, 3G mobile networks or general packet radio service (GPRS)/global system for mobile communications (GSM). Depending on the type or the communication connection, the bandwidth of the connection may vary significantly. Therefore, the device profile may also be determined based on the type of the communication connection or its bandwidth. The amount and complexity of the television program information of EPG data to be transmitted may, in this case, also depend on the type or bandwidth of the communication connection, adapting the amount of data to be transmitted to the communication speed of the device or even to the scrolling speed of the user.

The Device profile may be determined by the data processor by, for example, reading hardware specification data from a memory in the device or a connected device, identifying and transmitting details of a firmware version of a device, actively scanning data storage devices to determine available storage capacity or polling or pinging network connected devices to determine network capacity.

If, in another embodiment of the invention, the device profile is based on the type of the receiver / television receiver, the EPG data may be selected, tailored or packaged accordingly. If, for example, it is known that the television receiver is a handheld device such as a mobile phone, a reduced amount of television program information may be transmitted. If, however, the television receiver is characterized as stationary, a rich dataset may be provided.

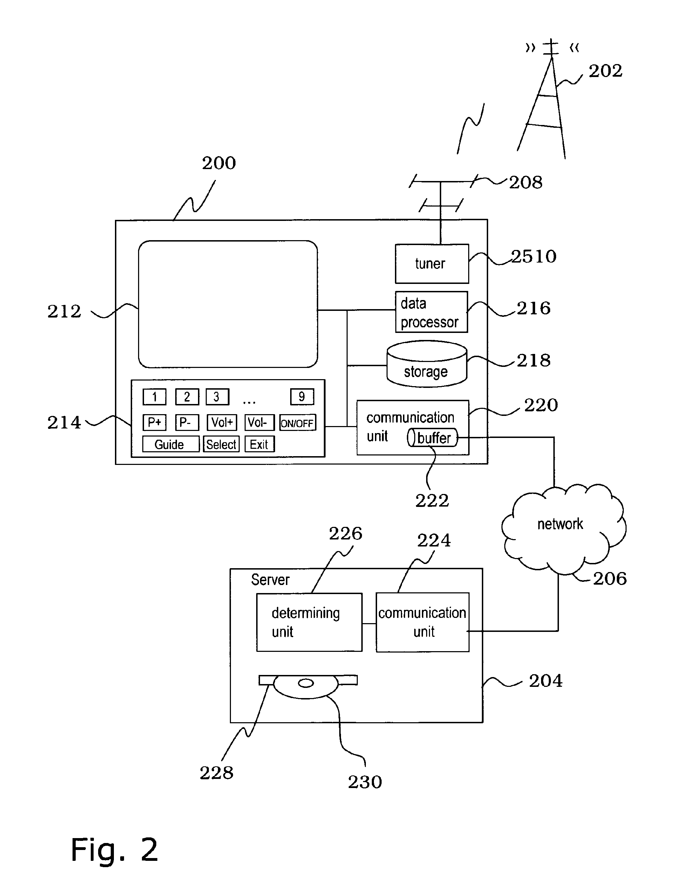

In Fig. 2, a television receiver 200 receives a broadcast signal transmitted by a broadcasting station 202. Further, television receiver 200 is connected to a server 204 via a network 206.

At television receiver 200, the broadcasting signal is received by an antenna 208 connected to a tuner 210. Television receiver 200 further includes a display 212 adapted to display a television picture and television program information, e.g. EPG data. Receiver 200 further includes an input unit 214 for enabling a user to enter commands for navigating through the television channels and programs and/or through the EPG data, a data processor 216, a storage 218 for storing e.g. the EPG data, and a communication unit 220 for communicating with server 204 via network 206. The communication may be supported by a buffer 222.

At the side of server 204, a further communication unit 224 for communicating with one of a plurality of television receivers via network 206 is included. Further, a determining unit 226 for determining EPG data for the television receivers, e.g. television receiver 200, is included. Server 204 may further include a reading unit 228 for reading storage media including computer program products and/or program instructions adapted to cause server 204 to execute a method for determining the EPG data for the television receivers. The program instructions may be stored on a storage medium 230.

The program instructions may also be adapted to cause the server to transmit further program instructions to the television receivers, e.g. television receiver 200, that may cause the television receivers to contribute to the method, e.g. by providing navigation data, a device profile and/or a user profile.

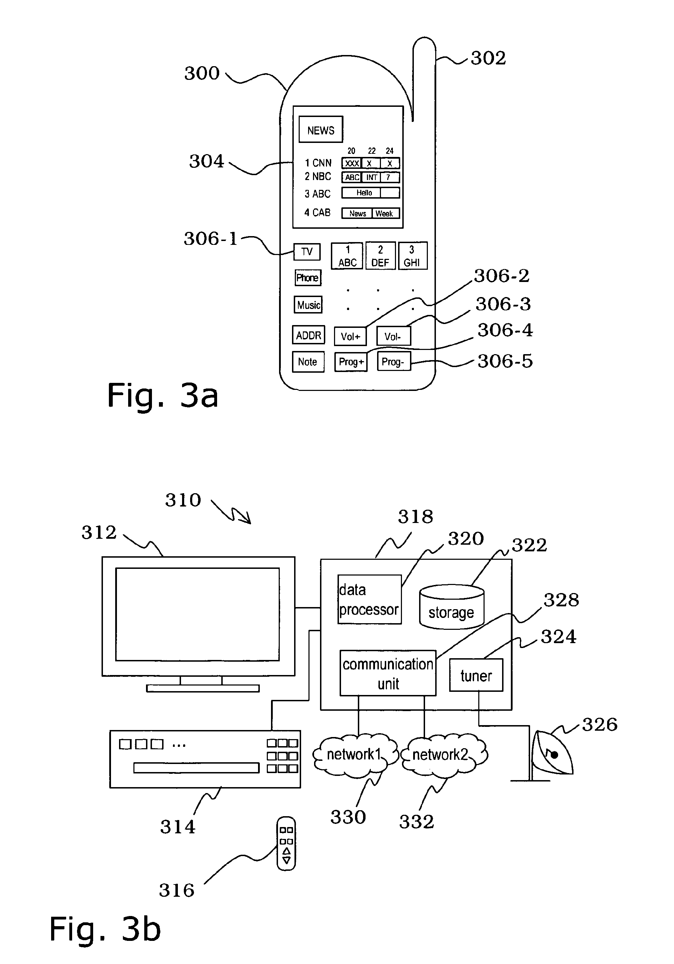

In Fig. 3a, a television receiver included in a handheld device is depicted by the example of a mobile phone 300. Mobile phone 300 includes an antenna 302 adapted to receive broadcast signals and to communicate with a server, e.g. server 204, via a network. For communicating with the server, a communication unit (not shown) may be provided. Further, mobile phone 300 includes a display 304 for displaying television programs and related information, e.g. EPG data. Mobile phone 300 may further include special keys for using the handheld device as television receiver, such as keys 306-1 to 306-5.

In Fig. 3b, a media center personal computer 310 is depicted. Media center personal computer 310 includes a large display 312 capable of displaying high quality pictures. Further, for enabling a user to enter commands, media center personal computer 310 includes a keypad 314 and further a remote control 316. A central unit 318 of media center personal computer 310 includes a data processor 320, a storage 322 in which EPG data may be stored, a tuner 324 connected to a satellite receiving unit 326, and a communication unit 328 enabling communication via networks 330 and 332, e.g. with server 204.

EPG data may be stored in fixed memory in a device (e.g. hard disc or semiconductor memory). It may be stored in connected portable data carriers such as USB drives or a Sony MemoryStick ^{™}. The receiver may change its profile if the user changes its hardware configuration e.g. by increasing the available memory or by allocating hard disc space in a recorder to increase the storage capacity for EPG data. In other embodiments, storage requirements for EPG data may be shared between multiple devices for example on a Network Attached Storage device. In such a circumstance, the server may provide EPG data suitable for multiple devices according to a plurality of device profiles or for the connected device with the lowest specification (e.g. smallest screen size).

The foregoing devices in Figs. 2, 3a and 3b illustrate the variety of television receivers 200, 300, and 310 and the wide range of potential hardware profiles. It is to be understood that respective communication units may be adapted to transmit the respective device profile and user navigation information to a server, such as server 204. At the server side, the television program information to be transmitted to the respective television receivers 200, 300, and 310 is determined based on the respective device profile and on the navigation information of respective users. The television program information may then be transmitted to the respective television receivers 200, 300, and 310, where they may be used for supporting the respective user, e.g. when selecting broadcast channels or programs.

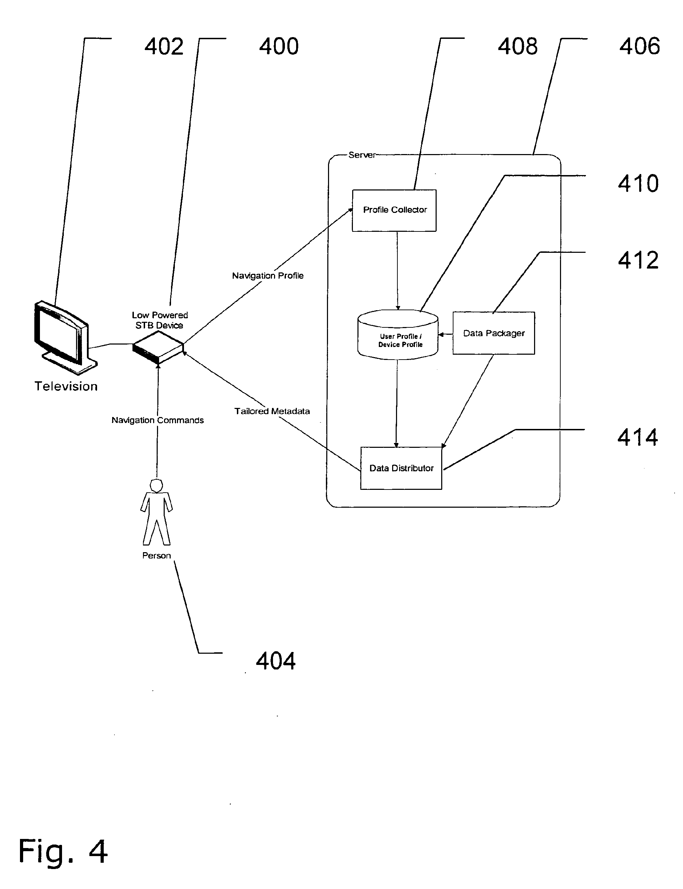

In Fig. 4, a further embodiment of a system for providing television program data, e.g. EPG data, is illustrated. At the television receiver side, a low powered set top box 400 is used for receiving a broadcast signal and the EPG data. The corresponding data is displayed at a television 402. A user 404 may enter navigation commands to a set top box 400 having low processing capabilities.

From set top box 400, device information and navigation information is transmitted to a server 406. This transmission may be performed synchronously or asynchronously, e.g. through an IP (internet protocol) connection.

Server 406 includes a profile collector 408 for aggregating the navigation information e.g. of user 404, thereby generating a respective user profile. Further, profile collector 408 may gather device information and aggregate the device information to a device profile. Alternatively, set top box 400 may provide its device profile as one piece of information to profile collector 408.

The device profile and/or user profile may then be stored in a storage 410 and may thereby be available for a data packager 412. Based on the device profile and the user profile, data packager 412 may determine ("tailor") EPG data according to device requirements of set top box 400 with low processing capabilities and according to the interests of user 404. The tailored EPG data may than be passed to a data distributor 414 for transmitting the tailored EPG data/tailored metadata to set top box 400. This transmission may for example be performed upfront upon a log-in of set top box 400 or on demand of user 404, requesting EPG data. It may further be performed synchronously or asynchronously, e.g. through an IP (internet protocol) connection.

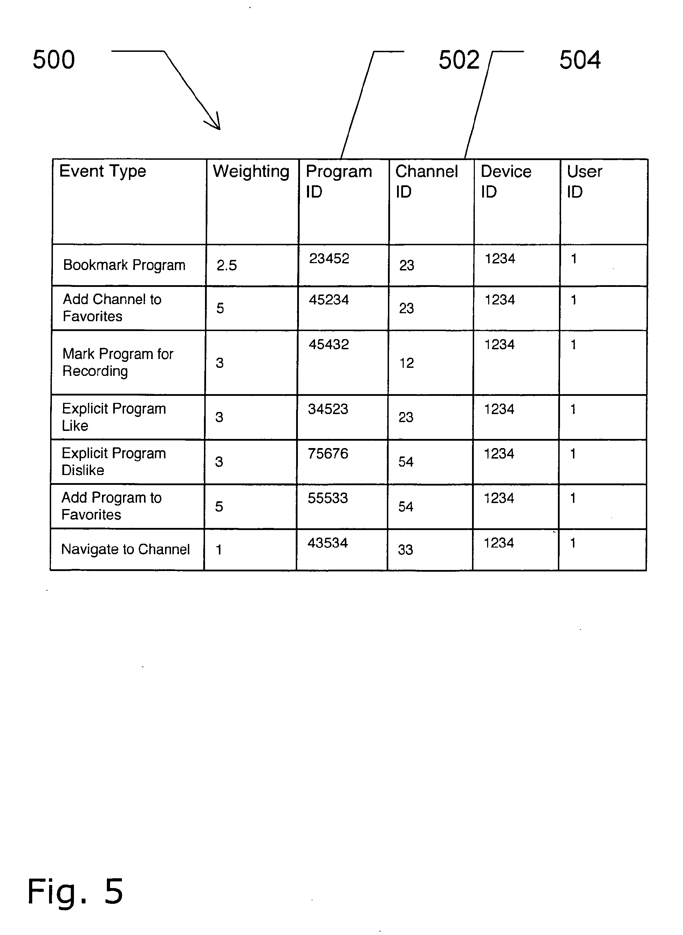

As illustrated in Fig. 5, profile collector 408 may track a series of implicit and explicit navigation events with respective importance weightings and parameters attached to each event. The explicit and implicit navigation events may be aggregated for each user, device, channel and program, as shown in table 500.

Table 500 classifies the navigation information according to an event type denoted in the first column. As non-limiting examples, a bookmarking of a program, an adding of a channel to favorites, a marking of a program for recording, an entering of an explicit program like statement or of an explicit program dislike statement, an adding of a program to favorites and/or a navigation to a channel are included. These examples are to be understood in a non-limiting sense, i.e. it should be noted that there may be many more navigation events that could be used to indicate channel or program preferences as a basis for generating the user profile.

To the event types, a weighting may be assigned, as illustrated in the second column of table 500. The weighting may indicate the value of the event type determining the user's preference. For example, a high value could be the user explicitly saying "I like this program and this channel", while a low value could, on the other hand, be an event like a channel switch as it may occur during channel zapping.

The example in table 500 shows a weighting on a scale of one to five. This scale has been chosen only for the sake of simplicity, and it is to be noted that any scale could be used. In the example, adding a channel to the favorites has a high weighting of five, while navigating to a channel has rather low weighting of one.

The respective events may be tracked and noted for each program, for each channel, for each device and for each user, as denoted in the last four columns of table 500. A corresponding table may for example be used in profile collector 408 for determining the user profile.

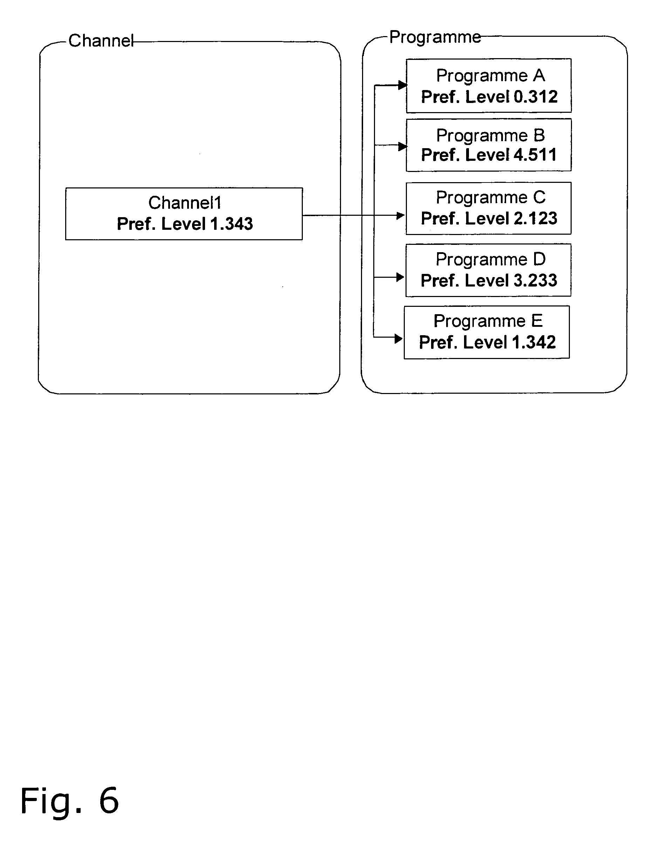

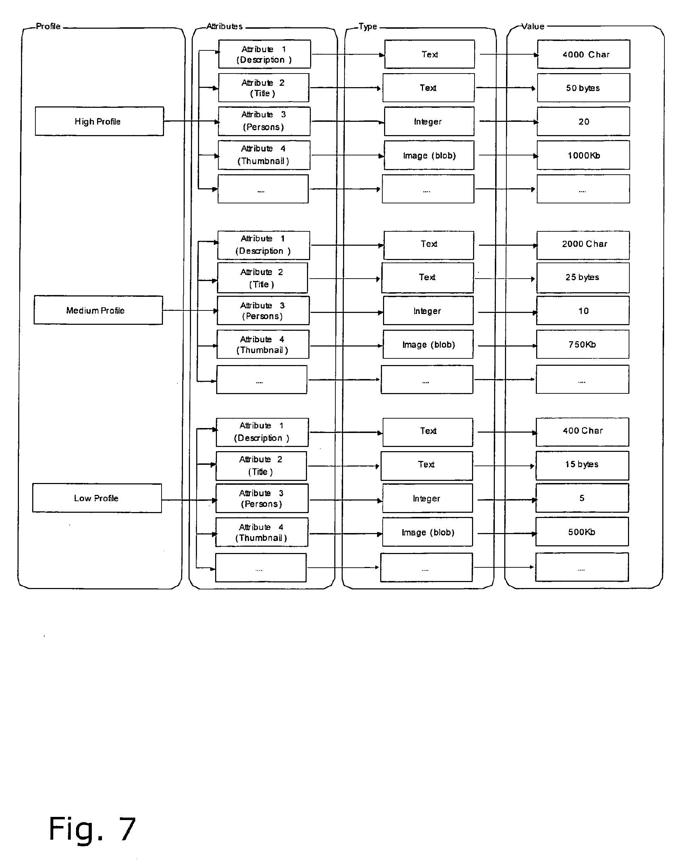

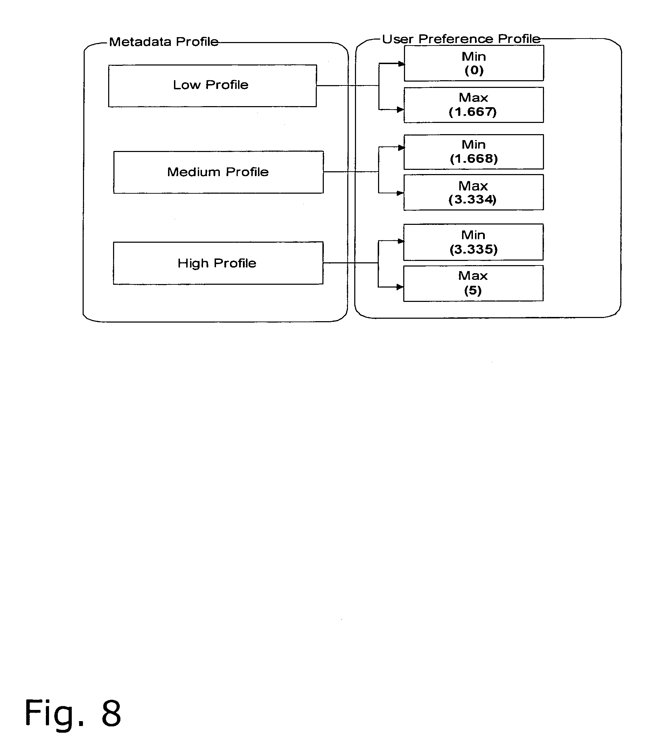

As illustrated in Fig. 6, the navigation information collected in table 500 may be aggregated for each user as a user preference level. This may be performed at e.g. two levels of granularity, i.e. by channel and by program. This may be useful if user does not like a channel in general, but has a high preference for one or several programs within the channel. In the example, the user has a low preference level of 1.343 for channel 1, but has at the same time a high preference level of 4.511 for program B. The levels in Fig. 6 may then be used to determine ("tailor") the television program information, for example in accordance with the device profile as explained above and as further illustrated in Figs. 7 and 8. User profile information may also be generated by program genre such as movie, documentary or sport, or alternatively or additionally by using a set of keywords selected from program metadata e.g. an actor's name.

Fig. 7 illustrates types of metadata profiles that may be provided at the server, e.g. server 406. In the example, three types of profiles characterized as "high profile", "medium profile", and "low profile" are shown. For each profile, the attributes to be included in the metadata (EPG data) are defined and described with their respective type and accuracy and/or storage need (value). For example, in the high profile, a long description (attribute 1) of 4000 characters is provided, while in the low profile, the description is restricted to only 400 characters. Correspondingly, the high profile includes a thumbnail of 1000 Kbyte, while in the medium profile the thumbnail is restricted to 750 Kbyte and in the low profile to 500 Kbyte.

The accuracy and/or storage need (value) for each of the attributes in a respective profile may depend on the device profile, e.g. may vary or be scaled in accordance with the device profile. Thereby, a "high profile", "medium profile" and "low profile" may be adapted for a certain device type or for each of the device types. The resulting metadata profile would consequently be adapted for the device type and could serve as a basis for determining the television program information in view of the user profile, as will be illustrated in Fig. 8.

Alternatively, the three different metadata profiles may also be mapped directly e.g. to different device profiles. For example, a device profile of a media center personal computer may be mapped to the high profile, while the device profile of a portable or handheld device may be mapped to the low profile.

It should be noted that the three types of metadata profiles are not to be understood in a limiting sense, but illustrate a simple method of using predefined types of metadata profiles for tailoring the EPG data. It is possible to provide further profiles. Further, there exist other methods for tailoring the EPG data, e.g. by a detailed selection of attributes and their accuracy or storage need without usage of a predefined type of profile. For example, only attributes that are frequently viewed by the user may be included, their storage need may be tailored with respect to the overall amount of available storage. Thumbnails may be generated and compressed with respect to the capabilities of a viewing device, if known from the device profile.

Fig. 8 illustrates a mapping of metadata profiles to a user preference profile. It should be noted that for this mapping, the metadata profiles may be selected in accordance with the device profile. The mapping accordingly reflects both, the device and the user profile, thereby allowing an enhanced adaption to both of the profiles.

The mapping may be performed at the channel and the program level. In accordance with the example, channels or programs with a preference level of 1.667 or less may be associated with the low profile, channels or programs with a preference level between 1.668 and 3.334 may be associated with the medium profile, and channels and/or profiles with a minimum preference level of 3.335 may be associated with the high profile.

In accordance with this embodiment, data packager 412 may cycle through each channel and each program when creating a data package for a specific user and device, determining which metadata profile to be used to provide the EPG data. With respect to the preference levels illustrated in Fig. 6, data packager 412 would, for example, provide only a short description of 400 characters for channel 1, but would include a long description of 4000 characters and a 1000 kilobyte thumbnail for program B.

The EPG data thus determined for ("tailored to") the user profile and the device profile would then be transferred to set top box 400 with low processing capabilities by data distributor 414. For example, data distributor 414 could provide a batch download or an on-demand IP (internet protocol) interface for devices to request metadata. In this case, the devices could identify themselves, so that the relevant data package can be retrieved.

EPG data may include not only data for scheduled broadcast television programs on linear television, but also data for on-demand programs as well as "catch-up TV". An advantage of the present invention is that more sophisticated filtering to provide more relevant EPG data to the user profile is performed at the server, rather than at the receiver which may have few computational resources to perform such filtering.

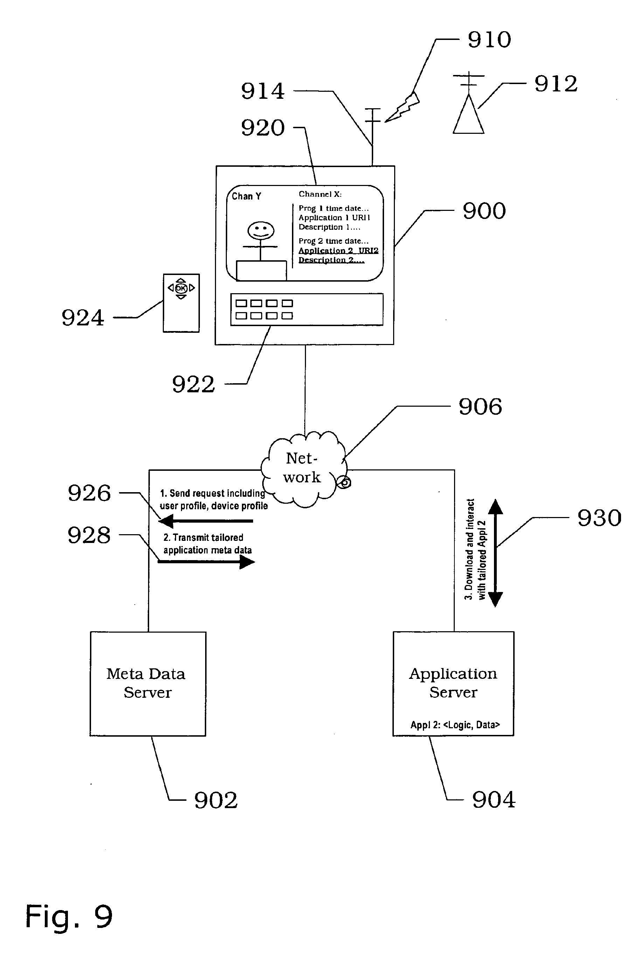

In Fig. 9, a system including a television apparatus 900, a server 902 (in the following referred to as "meta data server" 902), and a further server 904 (in the following referred to as "application server" 904) is illustrated. Communication between television apparatus 900, meta data server 902, and application server 904 may take place over network 906.

Television apparatus 900 may be adapted to receive a broadcast signal 910 transmitted by a broadcast station 912. Broadcast signal 910 may be an analog or a digital television broadcast signal, e.g. in accordance with a DVB, ATSC, ISDB or DMB standard, as described in the above. Broadcast signal 910 may be received at television apparatus 900 e.g. by an antenna 914, and may be displayed at a display 920. For allowing a user to interact with television apparatus 900, various input devices may be provided, such as, for example, a remote control 922 and a keypad 924.

Further, television apparatus 900 may include a storage (not shown) for storing software and data.

The software stored in the storage may include, for example, an operating system for operating television apparatus 900, and application software to be run e.g. on demand of the user. The application software may, for example, include an application for providing an electronic program guide. Further, the software may include an application execution engine, providing a runtime environment for executing further applications, such as widgets, gadgets, applets or the like. The further applications may, for example, be interpreted by an alternative software stack running on television apparatus 900, e.g. by a software stack configured to interpret XML or RSS feeds (as Rich Site Summary, RDF Site Summary, and/or Really Simple Syndication), by which the further applications may be defined. The further applications may be run at television apparatus 900 in a stand-alone mode without connecting further devices, or may establish a connection to a further server over a network, e.g. the internet. Via the connection, further application data may be downloaded, or the user may interact with the further server, e.g. by exchanging data with the further server.

The data stored in the storage may include content, such as multimedia data, e.g. video data recorded from the broadcast signal, and further multimedia data, such as images, audio/video data (in files or streams), textual data and/or executable applications, such as video games. Further, meta data related to the content available for display, and/or data for running the electronic program guide may also be stored in the storage. Still further, data related to applications that may be run within the application engine may also be stored, such as data defining an application logic and information to be made available to the user when the application is run.

At television apparatus 900, television program information may be requested by sending a request including the user profile and the device profile to meta data server 902 over network 906, as illustrated with first arrow 926. In response to the request, meta data server 902 may provide the television program information. As mentioned in the above, the television program information may also include meta data related to applications.

The meta data related to applications may be determined in view of the user profile and the device profile transmitted with the request.

For example, the applications may be determined such that they are of particular interest for the user.

Further, the applications may be determined such that television apparatus 900, having the device profile, may be adapted to retrieve and run the applications.

Still further, the meta data related to the applications may be tailored in accordance with the device profile, as described in the above. For example, descriptions and/or thumbnails, such as snap shots of the applications, may be determined such that they are suited to be transferred to television apparatus 900 and to be stored at television apparatus 900, e.g. under a given bandwidth of communication or in view of an amount of storage available.

At television apparatus 900, the television program information including meta data related to applications may be displayed at display 920. As illustrated, the meta data may include an application identifier, a description of the application and/or a URI (Uniform Resource Identifier) descriptive of a location for downloading the application. The meta data may therefore be adapted to support the user in selecting and downloading an application of interest for him and suited to be executed at his device.

Meta data related to channels and/or programs and meta data related to applications may be presented in an inter-related manner. For example, meta data referring to an application related to or provided for a given program may be displayed together with meta data for the program, as shown at display 920. Thereby, an application related to a given program, such as a voting application related to a quiz show, may be suggested as inter-related content.

In the example depicted, the user selects a second application of a list displayed at display 920, and downloads the second application from application server 904 as illustrated by a third arrow 930. Since the application has been suggested by meta data server in view of the user profile and the device profile, it is assured that the application is adapted to be run at television apparatus 900, and that it is likely that the application pleases the user.

Additionally, the user profile and the device profile may also be used for parameterizing the download of the application, or for parameterizing the application itself when downloading it from application server 904. For example, application data may be selected in accordance with a storage capacity of television apparatus 900, and/or a graphical user interface of the application may be adapted to a display capacity of television apparatus 900. The graphical user interface may also be accustomed to the user profile, e.g. by selecting a corresponding background color or picture which is likely to please to the user.

Further, the adaption of meta data to both, the user profile of the user and the device profile of television apparatus 900, assures that the user retrieves meta data related to content items, such as programs of a television channel and/or applications, the meta data being at the same time adapted to be displayed without causing problems due to restricted device capacities, such as restricted storage capacities, communication bandwidth or display capacities, and selected such that they are most likely to correspond to the user's personal taste.

Although specific embodiments have been illustrated and described herein, it will be appreciated by those of ordinary skill in the art that a variety of ultra net and/or equivalent implementations may be substituted for the specific embodiments shown and described without departing from the scope of the described embodiments. This application is intended to cover any adaptations or variations of the specific embodiments discussed herein. Therefore, it is intended that this invention be limited only by the claims and the equivalents thereof.

## Claims

1. A method of providing television program information, comprising:
determining a device profile of a receiver;
transmitting the device profile to a server;
determining a user profile of a user of the receiver;
determining, at the server, the television program information based on the device profile and on the user profile.

2. The method according to claim 1, wherein the device profile is based on a hardware component of the receiver.

3. The method according to claim 2, wherein the device profile is determined based on a technical parameter of the hardware component.

4. The method according to claim 3, wherein the technical parameter is a data processing rate, an access rate and/or a size of the hardware component.

5. The method according to one of claims 2 to 4, wherein the hardware component is a storage for storing the television program information.

6. The method according to one of claims 2 to 4, wherein the hardware component is a buffer for communicating with the server.

7. The method according to one of claims 2 to 4, wherein the hardware component is a display for displaying the television program information.

8. The method according to one of claims 2 to 4, wherein the hardware component is a data processor.

9. The method according to any of the preceding claims, wherein the device profile depends on a capacity of a connection between the receiver and the server.

10. The method according to claim 9, wherein the device profile is determined based on a bandwidth of the communication connection.

11. The method according to any of the preceding claims, wherein the device profile depends on a type of the receiver.

12. A television receiver, comprising:
a tuner adapted to receive a television channel broadcast and/or video on demand programs;
a communication unit adapted to communicate with a server;
a data processor adapted to determine a device profile of the television receiver and adapted to determine navigation information of a user using the television receiver;
wherein the communication unit is adapted to transmit the device profile and the navigation information to the server, and further adapted to receive television program information from the server, wherein the television program information is dependent on the device profile and on the navigation information.

13. A server, comprising:
a communication unit adapted to receive a device profile and navigation information from a television receiver;
a determining unit adapted to determine, based on the device profile and the navigation information, television program information to be transmitted to the television receiver.

14. A system, comprising:
a television receiver according to claim 12; and
a server according to claim 13.

15. A computer program product including program instructions adapted to cause a computer to execute the method of claim 1.
